# EUROPÄISCHE PATENTSCHRIFT

(11) **EP 1 397 418 B1**
(45) Veröffentlichungstag und Bekanntmachung des Hinweises auf die Patenterteilung: **14.11.2007**
(21) Anmeldenummer: 02740640.4
(22) Anmeldetag: 23.05.2002
(51) Int. Cl.: C08G 79/02, C08L 77/00, C08L 67/02, C08L 75/00, C09K 21/10, C09K 21/12, C09K 21/14, C08G 18/38, C08K 5/00

(54) **PHOSPHOR-STICKSTOFF-KONDENSAT, VERFAHREN ZU DESSEN HERSTELLUNG UND DESSEN VERWENDUNG ALS FLAMMSCHUTZMITTEL**
PHOSPHOR-NITROGEN CONDENSATE, METHOD FOR PRODUCING THE SAME AND THE USE THEREOF AS A FLAMEPROOFING AGENT
CONDENSAT PHOSPHORE-AZOTE, SON PROCEDE DE PRODUCTION ET SON UTILISATION COMME AGENT DE PROTECTION CONTRE LA FLAMME

(30) Priorität: 31.05.2001 DE 10126718
(43) Veröffentlichungstag der Anmeldung: 17.03.2004
(73) Patentinhaber: BASF Aktiengesellschaft, 67056 Ludwigshafen (DE)
(72) Erfinder: BRAND, Alexandra, 64291 Darmstadt (DE); SEITZ, Christian, 49074 Osnabrück (DE); ENGELMANN, Jochen, 67434 Neustadt (DE)
(86) Internationale Anmeldenummer: PCT/EP2002/005663
(87) Internationale Veröffentlichungsnummer: WO 2002/096976

(56) Entgegenhaltungen:
- DE-A- 2 351 886
- US-A- 5 854 309

## Beschreibung

Die Erfindung betrifft ein Phosphor-Stickstoff-Kondensat, erhältlich durch Herstellen eines Präkondensats durch Umsetzen von Harnstoff mit Melamin bei Temperaturen von mindestens 170°C und Umsetzen des Präkondensats mit Phosphorsäure bei Temperaturen von mindestens 180°C. Die Erfindung betrifft ferner die Verwendung des Phosphor-Stickstoff-Kondensats als Flammschutzmittel in Kunststoffen, insbesondere in thermoplastischen Formmassen und in Polyurethanen.

Kondensate wie Ammoniumpolyphosphat (APP), Melaminpolyphosphat und auch Melamincyanurat (MC) werden seit langem und erfolgreich als Flammschutzmittel eingesetzt. Doch können trotz ihrer prinzipiellen Flammschutzwirkung diese Substanzen in manchen Kunststoffen nicht eingearbeitet werden. Die Gründe dafür liegen in mangelnder thermischer Stabilität zur Einarbeitung, mangelnder Wirksamkeit, mangelnder Verträglichkeit und z.T. überraschend hohem Preis für diese stöchiometrisch hergestellten Verbindungen. So muss für viele Kunststoffe ein passendes Produkt gefunden werden, was ein thermisch optimales Zersetzungsfenster für eine Flammschutzwirkung im Kunststoff zeigt und eine chemisch verträgliche Natur mit dem Kunststoff besitzt.

Gut verfügbare und günstige Substanzen zur Herstellung von Flammschutzprodukten sind Melamin, Harnstoff und Phosphorsäure. Bislang konnte aber trotz intensiver Arbeiten noch kein Kondensationsprodukt aus diesen Bausteinen erhalten werden, welches alle Anforderungen an ein Flammschutzmittel für thermoplastische Formmassen oder für Polyurethanschäume erfüllt. Oft wird beobachtet, dass solche Verbindungen auch in ihrer Flammschutzwirkung und ihrem Verhalten im Kunststoff recht empfindlich von den Herstellbedingungen der Kondensate abhängen. Dies erklärt sich dadurch, dass solche Kondensate in Suspension oder in Feststoffreaktionen hergestellt werden, wobei die Produkteigenschaften sehr von den Synthesebedingungen abhängen.

Die bisher eingesetzten Flammschutzmittel zeigen verschiedene Nachteile, so lässt sich mit MC in glasfaserverstärkten Thermoplasten kein ausreichender Flammschutz erreichen. APP besitzt keine ausreichende thermische Stabilität, um in Thermoplasten mit hohen Verarbeitungstemperaturen eingesetzt zu werden. Der Einsatz in Polyurethanschäumen ist aufgrund des hohen Preises und spezieller Dosierverfahren unwirtschaftlich. Melaminphosphat bzw. -polyphosphat wirken erst in vergleichsweise hohen Zugabemengen, so dass die mechanischen und physikalischen Eigenschaften der Formmassen, besonders die Zähigkeit, sowie die elektrischen Eigenschaften wesentlich verschlechtert werden. Daher sind die kommerziell erhältlichen Substanzen wie APP, MC oder auch Melaminphosphat für eine Anwendung in thermoplastischen Formmassen oder in Polyurethanschäumen nur eingeschränkt geeignet.

Eine Herstellung von Kondensaten basierend auf Melamin, Harnstoff und Phosphorsäure ist aus dem Stand der Technik bekannt.

Gemäß JP-A-54102362 werden Melamin, Harnstoff und Phosphorsäure in einer Eintopfreaktion miteinander umgesetzt. Die Reaktion findet bei 260 bis 280°C innerhalb von 3 Stunden statt. Das beim Aufheizen von Harnstoff entstehende Ammoniak wird durch die anwesende Phosphorsäure sofort als Ammoniumphosphat gebunden. Die Bildung von großen Mengen Ammoniumpolyphosphaten ist aber bezüglich ihrer geringen Wirksamkeit in thermoplastischen Formmassen ungünstig. Auch wird je nach Kondensationsgrad des Polyphosphats ein nicht ausreichend stabiles Produkt erhalten.

US-A-4 043 987 beschreibt eine ähnliche Umsetzung, wobei für die Reaktion eine Polyphosphorsäure verwendet wird. Die Verwendung der Polyphosphorsäure erhöht zwar den Phosphorgehalt des Kondensats, jedoch kann dadurch die Flammschutzwirkung beeinträchtigt werden.

US-A-3 926 990 beschreibt die Herstellung eines Kondensats aus Harnstoff, Melamin und Phosphorsäure bei Temperaturen von 260 bis 270°C, wobei das sich bildende Ammoniak durch die vorhandene Phosphorsäure zu einem Ammoniumphosphat kondensiert wird.

Weitere Beispiele für Reaktionen von Melamin, Harnstoff und Phosphorsäure finden sich in WO 97/44377, wobei auch hier eine Eintopfreaktion mit anschließendem Temperschritt ausgeführt wird. Bei diesem Verfahren werden Melaminpolyphosphate erhalten.

US-A-5 854 309 beschreibt die Herstellung von Flammschutzmitteln für beispielsweise Polyurethane durch Erhitzen von Harnstoff mit Melamin und Phosphorsäure. Der Bildung von unerwünschten Ammoniumphosphaten wird dadurch vorgebeugt, dass Harnstoff zunächst mit Melamin bei Temperaturen bis maximal 160°C umgesetzt wird, um das entstehenden Ammoniak auszutreiben, und anschließend die Reaktion mit Phosphorsäure am Schmelzpunkt des Kondensats erfolgt, um ein "Amin-Phosphat" zu bilden. Die dabei erhaltenen Feststoffe sind jedoch thermisch so wenig stabil, dass eine Anwendung als Flammschutzmittel Nachteile aufweist.

Aufgabe der Erfindung war es daher ein Kondensat bereitzustellen, das aus kommerziell günstigen und leicht zugänglichen Edukten erhältlich ist und das als Flammschutzmittel für Kunststoffe verwendbar ist, wobei das Flammschutzmittel für eine Einarbeitung in die Kunststoffe thermisch ausreichend stabil und kunststoffverträglich sein soll. Gleichzeitig soll das Kondensat eine geringe Wasserlöslichkeit aufweisen, damit es als feuchtigkeitsbeständiges Flammschutzmittel verwendet werden kann. Weiterhin soll eine Einarbeitung auch in Kunststoffe mit heller Eigenfarbe ohne Beeinträchtigung derselben möglich sein.

Überraschend wurde nun gefunden, dass sich durch eine spezielle Art und Weise der Herstellung besonders in Bezug auf die Zugabereihenfolge der drei Komponenten Melamin, Harnstoff und Phosphorsäure sowie auf die Temperaturführung ein Kondensat erhalten lässt, welches sich gut in Kunststoffe einarbeiten lässt und gute Flammschutzwirkung zeigt.

Gegenstand der Erfindung ist daher ein Verfahren zur Herstellung eines Phosphor-Stickstoff-Kondensats, umfassend die Schritte
i) Herstellen eines Präkondensats durch Umsetzen von Harnstoff mit Melamin bei Temperaturen von mindestens 170°C, wobei die Edukte mindestens solange auf die Reaktionstemperatur erwärmt, bis ein Erstarren der Schmelze eintritt,
ii) Umsetzen des in Schritt i) erhaltenen Präkondensats mit Phosphorsäure bei Temperaturen von mindestens 180°C.

Weiterhin ist Gegenstand der Erfindung ein Kondensat, erhältlich durch vorstehend genanntes Verfahren und die Verwendung des Kondensats als Flammschutzmittel in Kunststoffen, bevorzugt in thermoplastischen Formmassen und Polyurethanen.

Schließlich sind Gegenstand der Erfindung thermoplastische Formmassen und Polyurethane, enthaltend das erfindungsgemäße Phosphor-Stickstoff-Kondensat, sowie die Verwendung dieser thermoplastischen Formmassen zur Herstellung von Formkörpern, Folien und Fasern.

Das erfindungsgemäße Verfahren umfasst 2 Schritte. In Schritt i) wird durch Umsetzung von Harnstoff mit Melamin bei Temperaturen von mindestens 170°C, bevorzugt von 170°C bis 550°C, besonders bevorzugt von 170°C bis 350°C ein Präkondensat hergestellt.

Die Dauer der Umsetzung zum Präkondensat hängt von der eingesetzten Menge der Edukte, insbesondere von der eingesetzten Harnstoffmenge ab.

Das Präkondensat wird anschließend im Schritt ii) des erfindungsgemäßen Verfahrens mit Phosphorsäure bei Temperaturen von mindestens 180°C, bevorzugt von 180°C bis 550°C, besonders bevorzugt von 200°C bis 350°C zu dem erfindungsgemäßen Stickstoff-Phosphor-Kondensat umgesetzt. Die Dauer der Umsetzung zum Präkondensat hängt von der eingesetzten Menge der Edukte ab. Es ist vorteilhaft, die Reaktionsdauer mindestens solange zu bemessen, bis keine Gasentwicklung mehr erkennbar ist. In einer bevorzugten Ausführungsform wird nach Abschluss der Gasentwicklung das Kondensat noch im angegebenen Temperaturbereich getempert, bevorzugt für 1 bis 5 Stunden.

Die Phosphorsäure kann in Reinform (Substanz) oder beispielsweise als wässrige Lösung eingesetzt werden. Wird die Phosphorsäure als wässrige Lösung eingesetzt, so weist diese im allgemeinen eine Konzentration von 70 bis 99 Gew.-%, bevorzugt von 80 bis 98 Gew.-% auf.

Im erfindungsgemäßen Verfahren werden üblicherweise 10 bis 80 Gew.-% Harnstoff, 10 bis 80 Gew.-% Melamin und 5 bis 80 Gew.-% Phosphorsäure, bezogen auf 100 Gew.-% der Summe der Edukte, verwendet. Bevorzugt werden 20 bis 70 Gew.-% Harnstoff, 20 bis 70 Gew.-% Melamin und 10 bis 60 Gew.-% Phosphorsäure, bezogen auf 100 Gew.-% der Summe der Edukte, verwendet.

In einer bevorzugten Ausführungsform beträgt das Gewichtsverhältnis von eingesetztem Harnstoff zu eingesetztem Melamin 0,5 bis 5 : 1, bevorzugt von 1 bis 3 :1, insbesondere etwa 2 :1. Ein höherer Anteil von Melamin führt im allgemeinen zu einer erhöhten Temperaturstabilität des Kondensats.

Ferner beträgt das Gewichtsverhältnis von eingesetzten Stickstoffverbindungen zu Phosphorsäure im allgemeinen 0,5 bis 20 : 1, bevorzugt 2 bis 10 : 1 und besonders bevorzugt etwa 2,5 bis 5 : 1, insbesondere etwa 3 : 1.

Die Umsetzungen des erfindungsgemäßen Verfahrens können gegebenenfalls in einer Inertgasatmosphäre erfolgen. Dabei sind unter Inertgas alle Gase zu verstehen, die mit den Ausgangssubstanzen, Zwischen- und Endprodukten keine chemischen Reaktionen eingehen: Geeignete Inertgase sind Argon, Stickstoff, Helium und Kohlendioxid, besonders bevorzugt ist Stickstoff.

Das erfindungsgemäße Kondensationsverfahren vermeidet die Generierung von größeren Mengen der Ammonium(poly)phosphate im Produkt durch Präkondensation von Melamin und Harnstoff und arbeitet in einem Temperaturbereich, der zu einem Kondensat mit optimiertem Zersetzungsbereich für eine Einarbeitung und Wirkung in Kunststoffen führt. Der Kondensationsgrad der Phosphatkomponente ist dabei so hoch, dass nur eine minimale Wasserlöslichkeit vorliegt aber noch nicht so hoch, dass die Substanz als Flammschutzmittel unwirksam ist. Der Anteil von Ammoniumphosphat kann durch die Zugabemenge an Phosphorsäure gut gesteuert werden, um sehr wirksame und kostengünstige Produkte zu erhalten.

Mit Hilfe des erfindungsgemäßen Verfahrens werden Phosphor-Stickstoff-Kondensate erhalten, die sich durch eine hohe Temperaturstabilität auszeichnen. Das bedeutet, dass bei Temperaturen im Bereich von im allgemeinen Raumtemperatur bis 300°C über einen Zeitraum von mindestens 15 Minuten keine Zersetzung festzustellen ist, d.h. der Masseabbau bei 300°C beträgt üblicherweise weniger als 10 %, bevorzugt weniger als 5 %, besonders bevorzugt weniger als 1 %, bezogen auf die Gesamtmasse des Kondensats.

Gleichzeitig weisen die nach dem erfindungsgemäßen Verfahren hergestellten Phosphor-Stickstoff-Kondensate eine sehr geringe Wasserlöslichkeit auf. Die Wasserlöslichkeit dieser Verbindungen liegt im allgemeinen bei 0 bis 10 g/l, bevorzugt bei 0 bis 1 g/1, besonders bevorzugt bei 0 bis 0,5 g/1. Die Phosphor-Stickstoff-Verbindungen sind somit insbesondere dort geeignet, wo die Beständigkeit gegen Feuchtigkeit eine große Rolle spielt.

Als Reaktionsgefäße für die Durchführung des erfindungsgemäßen Verfahrens sind im allgemeinen alle gängigen Reaktortypen geeignet. Üblicherweise wird ein Reaktor stehend oder liegend verwendet, der eine oder mehrere Wellen zur Durchmischung und/oder Wandabreinigung des Produktes aufweist, beispielsweise ein Rührkessel mit bevorzugt wandgängigem Rührer, ein Schaufeltrockner, ein Discotherm-Reaktor (DTB), ein CRP-Reaktor (Co-Rotating-Processor) oder ein ORP-Reaktor (Opposite-Rotating-Processor). Durch die Wahl eines geeigneten Reaktors kann das sich bildende, gegebenenfalls feste, Produkt noch während der ablaufenden Reaktion in Schritt a) gemahlen und homogenisiert werden.

Das erfindungsgemäße Verfahren, kann sowohl in kontinuierlicher als auch in diskontinuierlicher oder halbkontinuierlicher Arbeitsweise durchgeführt werden.

Die durch das erfindungsgemäße Verfahren erhältlichen Stickstoff-Phosphor-Kondensate können in Kunststoffen als Flammschutzmittel verwendet werden. Besonders bevorzugt werden die erfindungsgemäßen Kondensate in thermoplastischen Formmassen und in Polyurethanen, insbesondere in Polyurethanhartschäumen, verwendet.

Ein weiterer Gegenstand der vorliegenden Erfindung sind daher thermoplastische Formmassen, enthaltend:
A) 5 bis 99 Gew.-%, bevorzugt 10 bis 80 Gew.-%, besonders bevorzugt 30 bis 80 Gew.-% eines thermoplastischen Polymers als Komponente A;
B) 1 bis 40 Gew.-%, bevorzugt 5 bis 35 Gew.-%, besonders bevorzugt 10 bis 30 Gew.-% des erfindungsgemäßen Phosphor-Stickstoff-Kondensats als Komponente B;
C) 0 bis 30 Gew.-%, bevorzugt 0,1 bis 30 Gew.-%, besonders bevorzugt 1 bis 20 Gew.-% einer Phosphor- und/oder Stickstoffverbindung als Komponente C;
D) 0 bis 50 Gew.-%, bevorzugt 1 bis 50 Gew.-%, besonders bevorzugt 20 bis 40 Gew.-% Füllstoffe als Komponente D;
E) 0 bis 5 Gew.-%, bevorzugt 0,01 bis 3 Gew.-% Schmiermittel als Komponente E;
F) 0 bis 10 Gew.-%, bevorzugt 0,1 bis 8 Gew.-%, besonders bevorzugt 0,5 bis 3 Gew.-% üblicher Zusatzstoffe als Komponente F;
G) 0 bis 30 Gew.-%, bevorzugt 0,1 bis 25 Gew.-%, besonders bevorzugt 1 bis 20 Gew.-% übliche Zähmodifier als Komponente G.

A) Geeignete thermoplastische Polymere sind sowohl Polykondensate als auch Polymerisate und Polyaddukte. Geeignete thermoplastische Polykondensate sind Polyamide, besonders bevorzugt Polyamid 66, Polyamid 6, Polyamid 11, Polyamid 12, Polyamid 46 sowie Copolyamide wie Polyamid 6/6T, Polyamid 66/6T oder Polyamide, aufgebaut aus Caprolactam und Hexamethylenadipinsäureamid und gegebenenfalls einem weiteren Comonomeren, Polycarbonate, Polyester, bevorzugt Polyterephthalate wie Polyethylenterephthalat und Polybutylenterephthalat, Polyphenylenoxide, Polysulfone und Polyvinylacetate. Geeignete thermoplastische Polymerisate sind Polyolefine, insbesondere Polyethylen, Polypropylen, Poly-1-buten, Poly-4-methyl-1-penten, des weiteren Polyvinylchlorid, Polyvinylidenchlorid, Polymethylmethacrylat, Polyacrylnitril, Polystyrol, schlagzähes Polystyrol, Polyacetale, Polyvinylalkohole, Polyvinylacetat und Poly-p-xylylen. Geeignete thermoplastische Polyaddukte sind lineare Polyurethane. Besonders bevorzugt ist die Komponente A ein thermoplastisches Polykondensat, insbesondere ein Polyamid oder ein Polyester. Ganz besonders bevorzugt handelt es sich um Polyamid 66, Polyamid 6, Polyamid 6/6T, Polyamid 66/6T, Polyamid 6/66 oder um Polyethylenterephthalat und Polybutylenterephthalat. Sowohl Polyamid 66 sowie Polyamid 6, Polyamid 6/6T, Polyamid 66/6T, Polyamid 6/66 als auch Polyethylenterephthalat und Polybutylentherephthalat sind relativ hochschmelzende Polymere. Eine Verarbeitung zu thermoplastischen Formmassen erfordert daher den Einsatz von Komponenten, die sich bei dem zur Verarbeitung erforderlichen hohen Temperaturen nicht zersetzen. Daher sind die thermisch sehr stabilen erfindungsgemäßen Phosphor-Stickstoff-Verbindungen zum Einsatz als Flammschutzmittel in solchen thermoplastischen Formmassen hervorragend geeignet.
   Weitere geeignete thermoplastische Polymere sind Styrol-Acrylnitril-Copolymerisate (SAN), α-Methylstyrol-Acrylnitril-Copolymerisate, Styrol-Methacrylsäuremethylester-Copolymerisate und Styrol-Maleinsäurenydrid-Copolymerisate sowie Acrylnitril-Butadien-Styrol-Polymerisate (ABS) und Acrylnitril-Styrol-Acrylester-Polymerisate (ASA).
B) Bei der Komponente B handelt es sich um die erfindungsgemäßen Phosphor-Stickstoff-Kondensate, die nach dem erfindungsgemäßen Verfahren herstellbar sind.
C) Die Komponente C ist eine Phosphor- und/oder Stickstoffverbindung, bevorzugt ausgewählt aus Guanidinsalzen, Allantoin-Verbindungen, Ammoniumpolyphosphaten, Melamin und Melaminverbindungen sowie die Kondensationsprodukte Melam und Melem, besonders bevorzugt Melamincyanurat oder Melaminphosphat (insbesondere Melaminpyrophosphat und Melaminpolyphosphat), Phosphinate, bevorzugt Kalziumphosphinat und Salze von Dialkylphosphinsäuren. Ebenfalls können Gemische dieser Verbindungen verwendet werden. Die Komponente C wird im allgemeinen als Co-Flammschutzmittel verwendet.
D) Geeignete Füllstoffe sind Salze, wie Carbonate, insbesondere Calciumcarbonat, oder Hydroxide, bevorzugt Magnesiumhydroxid und Aluminiumhydroxid, und Sulfate, bevorzugt Kalzium- und Bariumsulfat, und Silicate wie Talk, Ton und Glimmer, Kieselerde, sowie Glasfasern, -plättchen und -kugeln sowie Holzmehl und Cellulosepulver.
E) Geeignete Schmiermittel sind insbesondere Fettsäureamide bzw. -ester, die jeweils ein- oder mehrwertig sein können, Fettsäuresalze, bevorzugt Fettsäuresalze des Zinks und Kalziumstearat, Salze und Ester der Montansäure, wobei die Ester der Montansäure bevorzugt sind, insbesondere solche mit C₁₂- bis C₁₆-Alkylketten, Polyalkylenwachse und modifizierte Alkylenwachse, insbesondere Polyethylenwachse und teiloxidierte Polyethylenwachse.
F) Übliche Zusatzstoffe sind Stabilisatoren, Nukleierungsmittel, Pigmente, Farbstoffe, Weichmacher und Antitropfmittel.
G) Als übliche Zähmodifier sind insbesondere Ethylen-Propylen-Kautschuk (EPM) und Ethylen-Propylen-Dien-Kautschuke (EPDM), die jeweils bevorzugt mit reaktiven Gruppen (Carbonsäuren, Anhydriden) gepfropft sind, sowie Copolymere des Ethylens mit Acrylsäure und/oder Methacrylsäure und/oder den Estern dieser Säuren, geeignet.

Die thermoplastischen Formmassen können durch Mischen der Komponenten A und B sowie gegebenenfalls C bis G bei erhöhten Temperaturen, beispielsweise bei 100 bis 400°C, so dass die Komponente A aufgeschmolzen wird, hergestellt werden.

Diese thermoplastischen Formmassen, enthaltend die erfindungsgemäßen Phosphor-Stickstoff-Verbindungen als Flammschutzmittel, können zur Herstellung von Formkörpern, Folien und Fasern verwendet werden.

Die erfindungsgemäßen Stickstoff-Phosphor-Kondensate können vorteilhaft als Flammschutzmittel für Polyurethane, bevorzugt für Polyurethanschäume, besonders bevorzugt für Polyurethanhartschäume, verwendet werden. Ein Gegenstand der Erfindung sind demzufolge Polyurethane, erhältlich durch Umsetzung der Komponenten
H) Di- und/oder Polyisocyanate mit
I) gegenüber Isocyanaten reaktive Wasserstoffatome aufweisenden Verbindungen und
J) gegebenenfalls Treibmittel und
K) gegebenenfalls Katalysatoren, Hilfs- und/oder Zusatzstoffe,
dadurch gekennzeichnet, dass als weitere Komponente B) das erfindungsgemäße Phosphor-Stickstoff-Kondensat zugegeben wird.

Zu den Polyurethanen, enthaltend die Komponenten H) und I) und gegebenenfalls J) und K) wird das erfindungsgemäße Phosphor-Stickstoff-Kondensat im allgemeinen in einer Menge von 1 bis 50 Gew.%, bevorzugt von 5 bis 40 Gew.%, mehr bevorzugt von 10 bis 30 Gew.%, bezogen auf das Gewicht der Komponenten H) und I) und gegebenenfalls J) und K) eingesetzt.

Für die Komponenten H) bis K) gilt folgendes:
H) Als organische Di- und/oder Polyisocyanate kommen die an sich bekannten aliphatischen, cycloaliphatischen, aliphatischen und vorzugsweisen aromatischen mehrwertigen Isocyanate in Frage, die gegebenenfalls nach allgemein bekannten Verfahren modifiziert sein können. Bevorzugt verwendet werden Di- und/oder Polyphenylmethan-diisocyanaten und Toluylendiisocyanate. Die organischen Di- und Polyisocyanate können einzeln oder in Form von Mischungen eingesetzt werden.
I) Als Verbindungen mit gegenüber Isocyanaten reaktiven Wasserstoffatomen kommen Verbindungen in Frage, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Zweckmäßigerweise werden solche mit einer Funktionalität von 2 bis 8, vorzugsweise 2 bis 6, und einem Molekulargewicht von 400 bis 8000, vorzugsweise von 500 bis 4000 verwendet. Bewährt haben sich z.B. Polyether-polyamine und/oder vorzugsweise Polyole, basierend insbesondere auf Ethan- und/oder Propandiol, ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Ebenfalls kann die Komponente I) übliche Kettenverlängerungsmittel mit einem Molekulargewicht von 60 bis 399 umfassen, wie beispielsweise zwei- oder dreiwertige Alkohole, z.B. Ethandiol, Propandiol und/oder Butandiol.
   Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge bis 20 Gew.-%, vorzugsweise von 2 bis 8 Gew.-%, bezogen auf das Gewicht der Komponente I), zum Einsatz.
J) Als Treibmittel wird vorzugsweise Wasser eingesetzt. Der Wassergehalt beträgt bevorzugt 0,1 bis 4, Gewichtsteile, bezogen auf 100 Gewichtsteile der Komponenten I), J) und K). Zusätzlich zu Wasser können auch physikalisch wirkende Treibmittel, wie beispielsweise niedrigsiedende Kohlenwasserstoffe, eingesetzt werden.
K) Als Katalysatoren können solche Verbindungen zur Anwendung kommen, die die Reaktion der reaktive Wasserstoffatome enthaltenden Verbindungen (I) mit den Polyisocyanaten (H) stark beschleunigen. Bevorzugt hierfür sind tertiäre Amine, Zinn- und Bismutverbindungen, Alkali- und Erdalkalicarboxylate, quarternäre Ammoniumsalze, s-Hydroxytriazine und Tris-(dialkylaminomethyl)-phenole. Die Katalysatoren und Mischungen dieser werden üblicherweise in einer Menge von 0,1 bis 10 Gewichtsteilen, bevorzugt 1 bis 5 Gewichtsteilen, bezogen auf 100 Gewichtsteile der Komponenten I), J) und K), eingesetzt.

Weitere Hilfs- und Zusatzstoffe sind beispielsweise oberflächenaktive Substanzen, Schaumstabilisatoren, Zellregler, Füllstoffe, Pigmente und Hydrolyseschutzmittel.

Ferner können als Zusatzmittel neben dem erfindungsgemäßen Phosphor-Stickstoff-Kondensat weitere Flammschutzmittel als Co-Flammschutzmittel eingesetzt werden. Bevorzugte Co-Flammschutzmittel umfassen beispielsweise gegenüber Isocyanatgruppen reaktive Phosphonate und/oder gegenüber Isocyanatgruppen nicht reaktive Phosphonsäure- oder Phosphorsäureester. Die Co-Flammschutzmittel werden üblicherweise in einer Menge von 0 bis 50 Gew.-%, bevorzugt von 1 bis 30 Gew.-%, bezogen auf das Gesamtgewicht der Polyolkomponente I), zugegeben.

Nähere Angaben über oben genannte und weitere Ausgangsstoffe sind der Fachliteratur, beispielsweise der Monographie von H.J. Saunders und K.C. Frisch, "High Polymers", Band XVI, Polyurethanes Teil 1 und 2, Verlag Interscience Publishers 1962 bzw. 1964 oder dem Kunststoff handbuch, Band VII, Polyurethane, Carl Hanser Verlag München, Wien, 1., 2. und 3. Auflage 1966, 1983 und 1993 zu entnehmen.

Das Umsetzungsverhältnis von Komponente H zu den Komponenten I), J) und K) liegt üblicherweise bei 0,8 bis 2 :1, bevorzugt von 0,9 bis 1,5 : 1.

Die erfindungsgemäßen Polyurethane weisen im allgemeinen eine Dichte von 0,02 bis 0,75 g/cm³, vorzugsweise von 0,025 bis 0,4 g/cm³ und insbesondere von 0,03 bis 0,1 g/cm³ auf. Diese erfindungsgemäßen Polyurethane eignen sich insbesondere als Dämmstoffe zur Kälte- und Wärmeisolation, z.B. im Bauwesen, in Warmwasserspeichern, in Kühlgeräten, in Erdgasspeichern und/oder Fernwärmerohren. Sie finden vorzugsweise als wärmedämmende Baustoffe in Dämmplatten und sogenannten Sandwichelementen Anwendung.

Durch die Verwendung der erfindungsgemäßen Phosphor-Stickstoff-Verbindungen als Flammschutzmittel in thermoplastischen Formmassen werden Flammschutzanforderungen von mindestens UL 94 V2, bevorzugt UL 94 V0 erfüllt. Dabei bedeutet UL Underwriter Laboratories, V2 bedeutet eine Nachbrennzeit pro Beflammung von ≤ 30 s und eine Gesamtnachbrennzeit bei 10 Beflammungen von ≤ 250 s. V0 bedeutet eine Nachbrennzeit pro Beflammung von ≤ 10 s und eine Gesamtnachbrennzeit von ≤ 50 s und kein brennendes Abtropfen. V1 (siehe Tabelle 1) bedeutet dieselbe Nachbrennzeit und Gesamtnachbrennzeit wie V2, jedoch kein brennendes Abtropfen.

Im Fall der mit den erfindungsgemäßen Phosphor-Stickstoff-Verbindungen ausgerüsteten Polyurethane werden mindestens die Flammschutzanforderungen für die deutsche Baustoffklasse B3, bevorzugt jedoch B2 erfüllt. Die B2-Klassifizierung erfordert ein Bestehen der in der DIN 4102 Teil 2 beschriebenen Anforderungen eines Rleinbrennertests. Für die Einstufung in die Klasse B2 darf die durch den Brenner an dem Probekörper hervorgerufene und gemessene Flammhöhe nicht größer oder gleich 15 cm betragen.

Die Erfindung wird durch nachfolgende Beispiele veranschaulicht, aber nicht darauf eingeschränkt.

### Beispiele:

### Beispiel 1: Herstellung des Präkondensats

743,0 g Harnstoff und 372,2 g Melamin wurden vermischt und in einem Kolben unter Stickstoffatmosphäre und Rühren auf 180°C aufgeheizt. Es wurde eine starke Gasentwicklung beobachtet. Die anfängliche Schmelze wurde nach 1 h bei 180°C fest und anschließend ohne Rühren noch 1 h bei 180°C getempert. Man erhielt 972,2 g eines farblosen Feststoffs, der rund 8 % lösliche Anteile enthielt. Im Bereich zwischen 200 und 300°C betrug der Masseverlust 17,6 %. Schmelzen fand nicht statt. Zur Bestimmung der löslichen Anteile wurden in den Beispielen ca. 15 Teile der Feststoffe 2 Stunden unter kräftigen Rühren mit 100 Teilen Wasser vermischt und die unlöslichen Anteile nach dem Absaugen und Trocknen zurückgewogen.

### Vergleichsbeispiel 1

50 g Melamin und 100 g Harnstoff wurden auf 130°C für 0,5 h erhitzt, wobei eine Schmelze entstand. Diese wurde noch 2 h bei 160°C unter Gasentwicklung gerührt. Man erhielt 119,0 g Produkt, welches bei 125°C teilweise schmolz und optisch bei 180°C eine Gasentwicklung zeigte. Der Masseverlust zwischen 200 und 300°C betrug 22,5 %. Das Pulver enthielt 5,9 % lösliche Anteile.

### Beispiel 2

232,6 g des in Beispiel 1 hergestellten Präkondensats wurden mit 174,9 g 99%iger Phosphorsäure vermischt und der Feststoff 1 h auf 200°C aufgeheizt. Dabei war eine Gasentwicklung zu beobachten, die nach einer Gasanalyse zu größten Teilen aus Stickstoff und CO₂ bestand. Ammoniak entwich nicht. Nach beendeter Gasentwicklung wurde der Feststoff 1 h bei 300°C thermisch nachbehandelt. Man erhielt 268,4 g eines farblosen Pulvers, welches in Wasser in Suspension eine pH-Wert von größer 5,5 zeigt. Die löslichen Anteile betrugen 0,6 %. Die Zusammensetzung wird mit C 13,4 %; H 3,0 %, N 31,8 %; P 16,1 und O 33,9 % bestimmt. Der thermische Abbau bei 300°C betrug 2 %.

### Vergleichsbeispiel 2

20 g des in Vergleichsbeispiel 1 hergestellten Präkondensats wurden mit 4,4 g 85%iger Phosphorsäure vermischt und 30 min auf 145°C aufgeheizt, wobei ein fast vollständiges Schmelzen der Substanz festgestellt wurde. Nach dem Abkühlen wurden 54,9 g eines weißen Feststoffs erhalten, der in Wasser einen pH-Wert von 7 und bei 300°C einen Masseabbau von 25,5 % zeigte. Die löslichen Anteile betrugen 1,9 %. Eine Einarbeitung in Polyamid war aufgrund der geringen thermischen Stabilität der Substanz nicht möglich.

### Vergleichsbeispiel 3

60 g Harnstoff und 20 g 99%iger Phosphorsäure wurden unter Rühren auf 180°C aufgeheizt und 4 h bei 180°C getempert. Es trat weder eine zähe Phase noch eine Schmelze auf. Man erhält 43,3 g Produkt, welches zu 71 % wasserlöslich ist. Ab 220°C zeigt sich eine Gasentwicklung.

### Vergleichsbeispiel 4

50 g Melamin und 50,5 g 99%ige Phosphorsäure wurden unter Rühren auf 230°C aufgeheizt und 1 h bei dieser Temperatur gehalten. Anschließend erhitzte man noch 1 h auf 300°C. Das weiße Pulver zeigte ab 390°C Zersetzung durch Gasentwicklung und in Wasser in Suspension einen pH-Wert von 7. Die löslichen Anteile betragen 6 %. Der P-Gehalt beträgt 17,9 %. Bei 300°C zeigt die Substanz einen Masseverlust von 2 %.

### Beispiel 3

35,0 g des in Beispiel 1 hergestellten Präkondensats wurden mit 26,6 g 99%iger Phosphorsäure vermischt und der Feststoff 1 h auf 230°C aufgeheizt. Dabei war eine Gasentwicklung zu beobachten. Nach beendeter Gasentwicklung wurde der Feststoff 1 h bei 280°C thermisch nachbehandelt. Man erhielt 45,4 g eines farblosen Pulvers, welches in Wasser in Suspension eine pH-Wert von größer 4,0 zeigte. Die löslichen Anteile lagen bei 23,8 %. Der Phosphorgehalt lag bei 14,8 %: Der thermische Abbau bei 300°C betrug 0 %.

### Beispiel 4

40,0 g des in Beispiel 1 hergestellt Präkondensats wurden mit 20,2 g 99%iger Phosphorsäure vermischt und der Feststoff 1 h auf 200°C aufgeheizt. Dabei war eine Gasentwicklung zu beobachten. Nach beendeter Gasentwicklung wurde der Feststoff 1 h bei 280°C thermisch nachbehandelt. Man erhielt 45,0 g eines farblosen Pulvers, welches in Wasser in Suspension eine pH-Wert von größer 5,5 zeigte. Die löslichen Anteile lagen bei 5,4 %. Der Phosphorgehalt lag bei 13,7 %: Der thermische Abbau bei 300°C betrug 0 %.

### Beispiel 5

30,0 g des in Beispiel 1 hergestellt Präkondensats wurden mit 30,3 g 99%iger Phosphorsäure vermischt und der Feststoff 1 h auf 200°C aufgeheizt. Dabei war eine Gasentwicklung zu beobachten. Nach beendeter Gasentwicklung wurde der Feststoff 1 h bei 280°C thermisch nachbehandelt. Man erhält 44,3 g eines farblosen Pulvers, welches in Wasser in Suspension eine pH-Wert von größer 7,0 zeigt. Die löslichen Anteile lagen bei 17,7 %. Der Phosphorgehalt lag bei 18,8 %: Der thermische Abbau bei 300°C betrug 0 %.

### 4Beispiel 6

30,0 g des in Beispiel 1 hergestellten Präkondensats wurden mit 30,1 g 99%iger Phosphorsäure vermischt und der Feststoff 1 h auf 230°C aufgeheizt. Dabei war eine Gasentwicklung zu beobachten. Nach beendeter Gasentwicklung wurde der Feststoff 1 h bei 280°C thermisch nachbehandelt. Man erhielt 54,0 g eines farblosen Pulvers, welches in Wasser in Suspension eine pH-Wert von größer 6,0 zeigt. Die löslichen Anteile lagen bei 11,5 %. Der Phosphorgehalt lag bei 18,9 %: Der thermische Abbau bei 300°C betrug 0 %.

### Beispiel 7

30,0 g des in Beispiel 1 hergestellten Präkondensats wurden mit 45,4 g 99%iger Phosphorsäure vermischt und der Feststoff 1 h auf 200°C aufgeheizt. Dabei war eine Gasentwicklung zu beobachten. Nach beendeter Gasentwicklung wurde der Feststoff 1 h bei 280°C thermisch nachbehandelt. Man erhielt 46,4 g eines farblosen Pulvers, welches in Wasser in Suspension einen pH-Wert von größer 2,5 zeigt. Die löslichen Anteile lagen bei 38,5 %. Phosphorgehalt und thermischer Abbau wurden nicht bestimmt.

### Beispiel 8

30,0 g des in Beispiel 1 hergestellten Präkondensats wurden mit 45,4 g 99%iger Phosphorsäure vermischt und der Feststoff 1 h auf 230°C aufgeheizt. Dabei war eine Gasentwicklung zu beobachten. Nach beendeter Gasentwicklung wurde der Feststoff 1 h bei 280°C thermisch nachbehandelt. Man erhält 59,1 g eines farblosen Pulvers, welches in Wasser in Suspension eine pH-Wert von größer 2,5 zeigte. Die löslichen Anteile lagen bei 37,7 %. Phosphorgehalt und thermischer Abbau wurden nicht bestimmt.

### Beispiel 9

50 g des in Beispiel 1 hergestellten Präkondensats wurden mit 50,5 g 99%iger Phosphorsäure vermischt und 1 h auf 260°C aufgeheizt. Nach beendeter Gasentwicklung wurde noch 1 h bei 300°C thermisch nachbehandelt. Man erhielt 73,6 g eines farblosen Feststoffs, der ab 345°C eine Gasentwicklung zeigte. In Wasser in Suspension wurde ein pH-Wert von 5,0 erreicht. Der P-Gehalt betrug 21,2 %. Der Masseabbau bei 300°C beträgt 4 %.

### Beispiel 11

In einen 0,77-1-Discotherm-Reaktor (DTB-Reaktor) wurden 59,6 g Melamin und 118 g Harnstoff eingefüllt und innerhalb von 1,75 h auf 180°C aufgeheizt. Nach 10 min bei 126°C Innentemperatur begann die Mischung zu schmelzen. Nachdem 15 min 180°C Innentemperatur gehalten worden waren, wurde die Mischung fest. Es wurde nur ein geringes Aufschäumen festgestellt, wobei am nachgeschalteten Waschturm anhand der pH-Messung deutlich Ammoniak nachgewiesen werden konnte. Nach 1 h bei 180°C wurden 117,4 g 99 % Phosphorsäure zugegeben, wobei die Innentemperatur auf 176°C abfiel und ein Anstieg des Drehmoments von 10 auf 20 Nm beobachtet wurde, das aber nach 10 min wieder auf 10 Nm abfiel. Es wurde innerhalb von 10 min auf 200°C aufgeheizt und diese Temperatur 1 h gehalten. Innerhalb von 20 min wurde auf 300°C aufgeheizt und diese Temperatur 1 h gehalten. Nach dem Abkühlen wurden 190,7 g eines weißen Pulvers erhalten, welches in Wasser eine pH-Wert von 7 zeigte und 7 % lösliche Anteile enthielt. Der P-Gehalt betrug 15,9 % und der Masseabbau bei 300°C 0 %.

### Beispiel 12

3576 g Melamin und 7128 g Harnstoff wurden in einem 30-1-DTB-Reaktor vorgelegt und mit Stickstoff abgedeckt. Es wurde auf 180°C aufgeheizt, wobei ein Schmelzen stattfand. Innerhalb 1 h wurde die Mischung fest. 7044 g 99%ige Phosphorsäure wurden portionsweise innerhalb von 1,25 h zugegeben. Es wird auf 200°C aufgeheizt und diese Temperatur 1 h gehalten. Die Reaktionsmischung blieb stets fest, es ist kein Aufschäumen sichtbar zu beobachten. Zum abschließenden Tempern wird noch 1 h bei 300°C gemischt, wobei ein leichter Anstieg des Drehmoments beobachtet wurde, welches aber nach 10 min wieder verschwand. Nach dem Abkühlen konnten 11,5 kg weißes, in Wasser unlösliches und neutral suspendierendes Produkt ausgetragen werden. C 13,9; H 3,9; P 16,8; N 31,2; O 34,5 %.

### Beispiel 13

5364 g Melamin und 7128 g Harnstoff wurden in einem 30-1-DTB-Reaktor vorgelegt und mit Stickstoff abgedeckt. Es wurde auf 180°C aufgeheizt, wobei ein Schmelzen stattfand. Innerhalb 1 h wurde die Mischung fest. 8290 g 85 % Phosphorsäure wurden portionsweise innerhalb von 1,25 h zugegeben. Es wurde auf 200°C aufgeheizt und diese Temperatur 1 h gehalten. Die Reaktionsmischung blieb stets fest, es war kein Aufschäumen sichtbar zu beobachten. Zum abschließenden Tempern wurde noch 1 h bei 300°C gemischt, wobei ein leichter Anstieg des Drehmoments beobachtet wurde, welches aber nach 10 min wieder verschwand. Nach dem Abkühlen konnten 12,7 kg weißes, in Wasser unlösliches und neutral suspendierendes Produkt ausgetragen werden. C 13,2; H 3,9; P 17,2; N 32,9; O 32, 3 %.

### Anwendungsbeispiele in Thermoplasten

Die Komponenten wurden auf einem Zweiwellenextruder (Werner & Pfleiderer ZSK 25) bei 280°C (PA 66) bzw. 260°C (PBT) homogen gemischt. Für die Brandtests nach UL 94 wurden Brandstäbe in der Dicke 1,6 mm auf einer Spritzgussmaschine hergestellt. Die Brandtests wurden nach der üblichen Konditionierung gemäß UL-Vorschrift durchgeführt.

| | |
|---|---|
| Komponente A1: | Polyamid 66 mit einer Viskositätszahl von 147 ml/g |
| Komponente A2: | Polybutylenterephthalat mit einer Viskositätszahl von 130 ml/g |
| Komponente B1: | PN-Verbindung aus Beispiel 3) |
| Komponente B2: | PN-Verbindung aus Beispiel 5) |
| Komponente B3: | PN-Verbindung aus Beispiel 4) |
| Komponente C1: | Melaminpolyphosphat (Melapur 200, Fa. DSM Melapur) |
| Komponente C2: | Melamincyanurat (Melapur MC 25, Fa. DSM Melapur) |
| Komponente C3: | Ammoniumpolyphosphat (Exolit AP422, Fa. Clariant) |
| Komponente C4: | Calciumphosphinat |
| Komponente D1: | Schnittglasfaser mit einer Dicke von 10 µm |

| **Beispiel** | **14** | **15** | **16** | **V17** | **V18** | **19** | **20** | **21** | **V22** |
|---|---|---|---|---|---|---|---|---|---|
| A1 | 55 | 55 | 55 | 55 | 55 | | | | |
| A2 | | | | | | 50 | 50 | 50 | 50 |
| B1 | 20 | | | | | 25 | 15 | | |
| B2 | | 20 | | | | | | 15 | |
| B3 | | | 20 | | | | | | |
| C1 | | | | 10 | | | | | |
| C2 | | | | 10 | | | | | |
| C3 | | | | | 20 | | | | 25 |
| C4 | | | | | | | 10 | 10 | |
| D1 | 25 | 25 | 25 | 25 | 25 | 25 | 25 | 25 | 25 |
| | | | | | | | | | |
| UL 94 (1,6 mm) | V0 | V0 | V0 | HB | HB | V2 | V0 | V0 | HB |

### Anwendungsbeispiele in Polyurethan-Hartschäumen

Eine Mischung aus

| | |
|---|---|
| 32,1 Gew.-Teilen | Polyetheralkohol auf Basis Saccharose/ Propylenoxid, OH-Zahl 440 mg KOH/g, |
| 7,9 Gew.-Teilen | eines stickstoffhaltigen Polyetheralkohols, OH-Zahl 770 mg KOH/g, |
| 16,0 Gew.-Teilen | N,N,-bis-(2-hydroxyethyl)aminomethan-phosphonsäure-diethylester (Fyrol 6) |
| 12,0 Gew.-Teilen | Diethylethanphosphonat (DEEP) |
| 2,0 Gew.-Teilen | eines Silikon-Schaumstabilisators, B 8443 der Fa. Th. Goldschmidt AG, |
| 5,0 Gew.-Teilen | n-Pentan |
| 25,0 Gew.-% | der in nachstehender Tabelle näher bezeichneten Feststoffe, |
| wurde mit | |
| 110,0 Gew.-Teilen | MDI-Rohprodukt (NCO-Gehalt 31,5 %) zu einem Polyurethanhartschaum umgesetzt und auf Brand-eigenschaften getestet. |

| Beispiel | V23 | 24 | 25 | 26 | V27 |
|---|---|---|---|---|---|
| | Ammonium- | | | | |
| Flammschutzmittel | polyphosphat | Beispiel 12 | Beispiel 13 | Beispiel 2 | Vgl.beispiel 2 |
| | (Exolit AP 422) | | | | |
| | 16 Gew.-% | 16 Gew.-% | 16 Gew.-% | 16 Gew.-% | 16 Gew.-% |
| Co-Flammschutz- | Fyre16, | Fyro16, | Fyro16, | Fyro16, | Fyro16, |
| mittel | 12 Gew.-% | 12 Gew.-% | 12 Gew.-% | 12 Gew.-% | 12 Gew.-% |
| | DEEP | DEEP | DEEP | DEEP | DEEP |
| Kleinbrennertest ¹⁾ | 12 cm | 14,8 cm | 14,2 cm | 15,8 cm | 15 cm |
| Aushärtung ²⁾ | 0 | - | + | 0 | -- |

| | | | | | |
|---|---|---|---|---|---|
| ¹⁾ Flammhöhe im Kleinbrennertest nach DIN 4102 Teil 2 ²⁾ Beurteilung der Aushärtung auf Basis des sog. Bolzentestes, hierbei bedeutet: ++ sehr gute Aushärtung + gute Aushärtung 0 mittlere Aushärtung - schlechte Aushärtung -- sehr schlechte Aushärtung | | | | | |

## Patentansprüche

1. Verfahren zur Herstellung eines Phosphor-Stickstoff-Kondensats, umfassend die Schritte
i) Herstellen eines Präkondensats durch Umsetzen von Harnstoff mit Melamin bei Temperaturen von mindestens 170°C, wobei die Edukte mindestens solange auf Reaktionstemperatur erwärmt werden, bis ein Erstarren der Schmelze eintritt,
ii) Umsetzen des in Schritt i) erhaltenen Präkondensats mit Phosphorsäure bei Temperaturen von mindestens 180°C.

2. Verfahren nach Anspruch 1, **dadurch gekennzeichnet, dass** 10 bis 80 Gew.-% Harnstoff; 10 bis 80 Gew.-% Melamin und 5 bis 80 Gew.-% Phosphorsäure, bezogen auf 100 Gew.-% der Summe der Edukte, verwendet werden.

3. Phosphor-Stickstoff-Kondensat, erhältlich nach einem Verfahren gemäß einem der Ansprüche 1 oder 2.

4. Verwendung des Phosphor-Stickstoff-Kondensats gemäß Anspruch 3 als Flammschutzmittel in Kunststoffen.

5. Verwendung gemäß Anspruch 4, **dadurch gekennzeichnet, dass** die Kunststoffe thermoplastische Formmassen, bevorzugt auf Polyamidbasis, oder Polyurethane umfassen.

6. Thermoplastische Formmassen, enthaltend
A) 5 bis 99 Gew.-% eines thermoplastischen Polymers als Komponente A;
B) 1 bis 40 Gew.-% einer Verbindung gemäß Anspruch 3 als Komponente B;
C) 0 bis 30 Gew.-% einer Phosphor- und/oder Stickstoffverbindung als Komponente C;
D) 0 bis 50 Gew.-% Füllstoffe als Komponente D;
E) 0 bis 5 Gew.-% Schmiermittel als Komponente E;
F) 0 bis 10 Gew.-% üblicher Zusatzstoffe als Komponente F;
G) 0 bis 30 Gew.-% üblicher Zähmodifier als Komponente G.

7. Polyurethane, erhältlich durch Umsetzung der Komponenten
H) Di- und/oder Polyisocyanate mit
I) gegenüber Isocyanaten reaktive Wasserstoffatome aufweisenden Verbindungen und
J) gegebenenfalls Treibmittel und
K) gegebenenfalls Katalysatoren, Hilfs- und/oder Zusatzstoffe,
**dadurch gekennzeichnet, dass** als weitere Komponente B) das Phosphor-Stickstoff-Kondensat gemäß Anspruch 3 zugegeben wird.

8. Verwendung der thermoplastischen Formmassen gemäß Anspruch 6 zur Herstellung von Formkörpern, Folien und Fasern.

9. Verwendung der Polyurethane gemäß Anspruch 7 zur Herstellung von Dämmstoffen.

## Claims

1. A process for preparing a phosphorus-nitrogen condensate, comprising the steps of
i) preparing a precondensate by reacting urea with melamine at at least 170°C, the starting materials being heated to reaction temperature at least until solidification of the melt occurs, and
ii) reacting the precondensate obtained in step i) with phosphoric acid at at least 180°C.

2. The process according to claim 1, which uses from 10 to 80% by weight of urea, from 10 to 80% by weight of melamine, and from 5 to 80% by weight of phosphoric acid, based on 100% by weight of the entirety of the starting materials.

3. A phosphorus-nitrogen condensate obtainable by a process as claimed in claim 1 or 2.

4. The use of the phosphorus-nitrogen condensate as claimed in claim 3 as a flame retardant in plastics.

5. The use as claimed in claim 4, wherein the plastics comprise thermoplastic molding compositions, preferably polyamide-based, or polyurethanes.

6. A thermoplastic molding composition comprising
A) from 5 to 99% by weight of a thermoplastic polymer as component A;
B) from 1 to 40% by weight of a compound as claimed in claim 3 as component B;
C) from 0 to 30% by weight of a phosphorus compound and/or nitrogen compound as component C;
D) from 0 to 50% by weight of fillers as component D;
E) from 0 to 5% by weight of lubricants as component E;
F) from 0 to 10% by weight of conventional additives as component F; and
G) from 0 to 30% by weight of conventional impact modifiers as component G.

7. A polyurethane obtainable by reacting the components
H) di- and/or polyisocyanates with
I) compounds having hydrogen atoms reactive toward isocyanates, and
J) if appropriate, blowing agents, and
K) if appropriate, catalysts, auxiliaries, and/or additives,
wherein the phosphorus-nitrogen condensate as claimed in claim 3 is added as further component B).

8. The use of the thermoplastic molding compositions as claimed in claim 6 for producing moldings, films, or fibers.

9. The use of polyurethanes as claimed in claim 7 for producing insulating materials.

## Revendications

1. Procédé de préparation d'un condensat phosphore-azote, comportant les étapes consistant à :
i) préparer un précondensat par réaction d'urée avec de la mélamine à des températures d'au moins 170°C, les éduits étant chauffés à température réactionnelle au moins jusqu'à ce qu'intervienne une solidification de la fonte,
ii)faire réagir le précondensat obtenu dans l'étape i) avec de l'acide phosphorique à des températures d'au moins 180°C.

2. Procédé selon la revendication 1, **caractérisé en ce que** 10 à 80 % en poids d'urée, 10 à 80 % en poids de mélamine et 5 à 80 % en poids d'acide phosphorique, par rapport à 100 % en poids de la somme des éduits, sont utilisés.

3. Condensat phosphore-azote, que l'on peut obtenir par un procédé selon l'une des revendications 1 ou 2.

4. Utilisation du condensat phosphore-azote selon la revendication 3 en tant qu'agent ignifuge dans des matières plastiques.

5. Utilisation selon la revendication 4, **caractérisée en ce que** les matières plastiques incluent des masses moulées thermoplastiques, de préférence à base de polyamide, ou des polyuréthannes.

6. Masses moulées thermoplastiques, contenant :
A)5 à 99 % en poids d'un polymère thermoplastique en tant que composant A ;
B)1 à 40 % en poids d'un composé selon la revendication 3 en tant que composant B ;
C)0 à 30 % en poids d'un composé de phosphore et/ou d'azote en tant que composant C ;
D)0 à 50 % en poids de matières de charge en tant que composant D ;
E)0 à 5 % en poids d'un lubrifiant en tant que composant E ;
F)0 à 10 % en poids d'additifs usuels en tant que composant F ;
G)0 à 30 % en poids d'un modificateur de viscosité usuel en tant que composant G.

7. Polyuréthannes, que l'on peut obtenir par réaction des composants :
H)diisocyanates et/ou polyisocyanates avec
I)des composés présentant des atomes d'hydrogène réactifs vis-à-vis des isocyanates et
J)éventuellement un agent gonflant et
K)éventuellement des catalyseurs, des adjuvants et/ou des additifs,
**caractérisés en ce que** le condensat phosphore-azote selon la revendication 3 est ajouté en tant que composant B) supplémentaire.

8. Utilisation des masses moulées thermoplastiques selon la revendication 6 pour la fabrication de corps moulés, de feuilles et de fibres.

9. Utilisation de polyuréthannes selon la revendication 7 pour la fabrication de matériaux isolants.
